# EUROPEAN PATENT APPLICATION

(11) **EP 4 729 743 A1**
(43) Date of publication of application: **22.04.2026**
(21) Application number: 25204874.9
(22) Date of filing: 26.09.2025
(51) Int. Cl.: F01D 5/28, F01D 11/12, C23C 28/00

(54) **TURBINE BLADE OUTERMOST ABRASIVE LAYER USING GRADED CERAMICS**

(30) Priority: 21.10.2024 US 202418921302
(71) Applicant: GE Vernova Technology GmbH, 5400 Baden (CH)
(72) Inventor: CALLA, Eklavya, 560066 Bangalore (IN); SAHOO, Ritupurna, 560066 Bangalore (IN); KONTER, Maxim, 5401 Baden (CH); PABLA, Surinder Singh, Greenville, 29615 (US); SEBASTIAN MANAVALAN, Antony M., 560066 Bangalore (IN); RAJ, Raghul, 560066 Bangalore (IN)
(74) Representative: Openshaw & Co.

(57) **Abstract**

A turbine blade (114) and related method for forming an outermost abrasive layer (170) are disclosed. The blade includes an airfoil body (124) having a radial outermost surface (160) relative to a turbine rotor, a bond coat (172) over the radial outermost surface, and the outermost abrasive layer over the bond coat. The outermost abrasive layer (170) includes a graded oxide ceramic layer (174) or a graded metal ceramic layer (176). The outermost abrasive layer is vacuum heat treated to harden the layer, resulting in increased rub and improved clearance between the blade tip, creating a smaller tip gap and lower leakage. The heat-treated abrasive layer is also resistant to oxidation at higher temperatures, e.g. greater than 1090°C (~2000°F), caused by the increased use of higher temperature fuels, such as hydrogen. The vacuum heat treatment also results in thermal cycle testing improvements.

## Description

### TECHNICAL FIELD

The disclosure relates generally to coatings. More specifically, the disclosure relates to a turbine blade outermost abrasive layer using ceramics.

### BACKGROUND

In a gas turbine, air is pressurized in a compressor and used to combust fuel in a combustor to generate a flow of hot combustion gases, whereupon such gases flow downstream through one or more turbines so that energy can be extracted therefrom. In accordance with such a turbine, generally, rows of circumferentially spaced turbine blades extend radially outwardly from a supporting rotor disk. Each blade typically includes a dovetail that permits assembly and disassembly of the blade in a corresponding dovetail slot in the rotor disk, as well as an airfoil body that extends radially outwardly from the dovetail.

The airfoil body has a generally concave pressure side wall and generally convex suction side wall extending axially between corresponding leading and trailing edges and radially between a root and a tip. Within a turbine engine, a shroud is a ring of material surrounding the rotating blades. Shrouds are stationary and may be formed of ceramic matrix composites (CMCs) protected with an environmental barrier coating (EBC) to avoid oxidation and recession in the presence of high temperature gas flow. Alternatively, shrouds may include metal components protected with a thermal barrier coating (TBC) to avoid oxidation and recession in the presence of high temperature air flow.

Turbine performance and efficiency may be enhanced by reducing the space between the radial outermost surface, i.e., tip, of the rotating turbine blade and the stationary shroud to limit the flow of gases over or around the tip of the blade that would otherwise bypass the blade. For example, a blade may be configured so that its tip fits close to the shroud during engine operation. Thus, generating and maintaining a small tip clearance is particularly desired for efficiency purposes. During engine operation, the blade tips can sometimes rub against the shroud, thereby increasing the gap and resulting in a loss of efficiency, or in some cases, damaging or destroying the blade set.

To reduce the loss of efficiency, an abrasive layer may be provided on the tip to assist in forming a close-fit tolerance with the shroud. In one example, the abrasive layer is formed as a continuous, but rough, ceramic layer and is typically quite hard. Some current approaches use an abrasive layer including cubic zirconia (cZ) and hafnia (HfO₂). Other current approaches use an abrasive layer including cubic boron nitride (cBN) in a soft nickel boron silicon (NiBSi) matrix that is laser cladded on a radial outermost surface of the blade. The hard ceramic material provides a cutter blade effect on the shroud from the radial outermost surface of the airfoil blade. Use of the noted ceramic materials has a number of disadvantages. For example, the ceramic formation process, such as those for the cBN and NiBSi matrix, has quality-impacting variables that are hard to control. Another disadvantage with the listed ceramic materials, and especially cBN materials, is the tendency to oxidize at higher temperatures at which turbine engines now operate, e.g., greater than 1090°C (~2000°F), due to the increased use of higher temperature fuels, such as hydrogen. The oxidation reduces the ceramic's hardness and ability to cut into the shroud to form a tight seal. Oxidation can also occur during manufacture, which necessitates prompt performance of a rub-in process during commissioning to avoid damaging the abrasive layer.

### BRIEF DESCRIPTION

All aspects, examples and features mentioned below can be combined in any technically possible way.

An aspect of the disclosure provides a turbine blade, comprising: an airfoil body having a radial outermost surface relative to a turbine rotor; a bond coat over the radial outermost surface; and an outermost abrasive layer over the bond coat, wherein the outermost abrasive layer includes a graded oxide ceramic layer including: a first layer over the bond coat including 100 weight % of a first ceramic and 0 weight % of a second ceramic different than the first ceramic, the first ceramic consisting of 8 weight % yttria stabilized zirconia (8YSZ); a second layer over the first layer including 65-85 weight % of the first ceramic and 15-35 weight % of the second ceramic; a third layer over the second layer including 40-60 weight % of the first ceramic and 40-60 weight % of the second ceramic; a fourth layer over the third layer including 5-25 weight % of the first ceramic and 75-95 weight % of the second ceramic; and a fifth layer over the fourth layer including 0 weight % of the first ceramic and 100 weight % of the second ceramic.

Another aspect of the disclosure includes any of the preceding aspects, and the bond coat includes at least one of: cobalt-nickel-chromium-aluminum-yttrium (CoNiCrAlY), nickel-chromium-aluminum-yttrium (NiCrAlY), nickel-cobalt-chromium-aluminum-yttrium (NiCoCrAlY), and cobalt-chromium-aluminum-yttrium (CoCrAlY).

Another aspect of the disclosure includes any of the preceding aspects, and the second ceramic includes one of pure alumina (Al₂O₃) or zirconia toughened alumina (ZTA).

Another aspect of the disclosure includes any of the preceding aspects, and the bond coat has a thickness of between 85-125 micrometers (µm); the first through fourth layers each have a thickness of between 55-75 µm; and the fifth layer has a thickness of between 100-125 µm.

Another aspect of the disclosure includes any of the preceding aspects, and the outermost abrasive layer is formed using a thermal plasma spray and a post-formation vacuum heat treatment including exposing the graded oxide ceramic layer to a temperature greater than 1000°C for a duration of at least 1 hour and then allowing the graded oxide ceramic layer to cool.

Another aspect of the disclosure includes a turbine blade, comprising: an airfoil body having a radial outermost surface relative to a turbine rotor; a bond coat over the radial outermost surface; and an outermost abrasive layer over the bond coat, wherein the outermost abrasive layer includes a graded metal ceramic layer including: a first layer over the bond coat consisting of a first ceramic consisting of 8 weight % yttria stabilized zirconia (8YSZ) having a porosity between 5-25%; a second layer over the first layer including 65-85 weight % of a metal and 15-35 weight % of a second ceramic; a third layer over the second layer including 40-60 weight % of the metal and 40-60 weight % of the second ceramic; a fourth layer over the third layer including 5-25 weight % of the metal and 75-95 weight % of the second ceramic; and a fifth layer over the fourth layer including 0 weight % of the metal and 100 weight % of the second ceramic.

Another aspect of the disclosure includes any of the preceding aspects, and the second ceramic is different than the first ceramic and includes one of pure alumina (Al₂O₃) or zirconia toughened alumina (ZTA).

Another aspect of the disclosure includes any of the preceding aspects, and the second ceramic includes 8YSZ having no porosity.

Another aspect of the disclosure includes any of the preceding aspects, and the bond coat includes M-chromium-aluminum-yttrium (MCrAlY); and the metal includes at least one of: MCrAlY, a nickel boron silicon (NiBSi) alloy, a nickel-chromium-iron-molybdenum (NiCrFeMo) alloy and a cobalt-chromium-molybdenum (CoCrMo).

Another aspect of the disclosure includes any of the preceding aspects, and the bond coat has a thickness of between 85-125 micrometers (µm); the first through fourth layers each have a thickness of between 55-75 µm; and the fifth layer has a thickness of between 100-125 µm.

Another aspect of the disclosure includes any of the preceding aspects, and the outermost abrasive layer is formed using a thermal plasma spray and a post-formation vacuum heat treatment including exposing the graded metal ceramic layer to a temperature greater than 1000°C for a duration of at least 1 hour and then allowing the graded metal oxide layer to cool.

Another aspect of the disclosure includes a method of forming an outermost abrasive layer for a radial outermost surface of a turbine blade, the method comprising: forming a bond coat on the radial outermost surface of the turbine blade; forming one of a graded oxide ceramic layer and a graded metal ceramic layer over the bond coat on the radial outermost surface of the turbine blade; and heat treating the one of the graded oxide ceramic layer and the graded metal ceramic layer on the radial outermost surface of the turbine blade.

Another aspect of the disclosure includes any of the preceding aspects, and the vacuum heat treating includes exposing the outermost abrasive layer to a temperature greater than 1000°C for a duration of at least 1 hour and then allowing the outermost abrasive layer to cool.

Another aspect of the disclosure includes any of the preceding aspects, and the vacuum heat treating includes increasing the temperature of the outermost abrasive layer to a temperature greater than 1200°C for a duration of at least 1.5 hours and then allowing the outermost abrasive layer to cool.

Another aspect of the disclosure includes any of the preceding aspects, and heat treating includes exposing the outermost abrasive layer to a temperature between 750°C and 1000°C in air for a duration between 30 minutes and 4 hours.

Another aspect of the disclosure includes any of the preceding aspects, and the bond coat includes at least one of: cobalt-nickel-chromium-aluminum-yttrium (CoNiCrAlY), nickel-chromium-aluminum-yttrium (NiCrAlY), nickel-cobalt-chromium-aluminum-yttrium (NiCoCrAlY), and cobalt-chromium-aluminum-yttrium (CoCrAlY).

Another aspect of the disclosure includes any of the preceding aspects, and the outermost abrasive layer includes a graded oxide ceramic layer including: a first layer over the bond coat including 100 weight % of a first ceramic and 0 weight % of a second ceramic different than the first ceramic, the first ceramic consisting of 8 weight % yttria stabilized zirconia (8YSZ); a second layer over the first layer including 65-85 weight % of the first ceramic and 15-35 weight % of the second ceramic; a third layer over the second layer including 40-60 weight % of the first ceramic and 40-60 weight % of the second ceramic; a fourth layer over the third layer including 5-25 weight % of the first ceramic and 75-95 weight % of the second ceramic; and a fifth layer over the fourth layer including 0 weight % of the first ceramic and 100 weight % of the second ceramic.

Another aspect of the disclosure includes any of the preceding aspects, and the second ceramic includes one of pure alumina (Al₂O₃) or zirconia toughened alumina (ZTA).

Another aspect of the disclosure includes any of the preceding aspects, and the bond coat has a thickness of between 85-125 micrometers (µm); the first through fourth layers each have a thickness of between 55-75 µm; and the fifth layer has a thickness of between 100-125 µm.

Another aspect of the disclosure includes any of the preceding aspects, and the outermost abrasive layer includes a graded metal ceramic layer including: a first layer over the bond coat consisting of a first ceramic consisting of 8 weight % yttria stabilized zirconia (8YSZ) having a porosity between 5-25%; a second layer over the first layer including 65-85 weight % of a metal and 15-35 weight % of a second ceramic; a third layer over the second layer including 40-60 weight % of the metal and 40-60 weight % of the second ceramic; a fourth layer over the third layer including 5-25 weight % of the metal and 75-95 weight % of the second ceramic; and a fifth layer over the fourth layer including 0 weight % of the metal and 100 weight % of the second ceramic.

Another aspect of the disclosure includes any of the preceding aspects, and the second ceramic is different than the first ceramic and includes one of pure alumina (Al₂O₃) or zirconia toughened alumina (ZTA).

Another aspect of the disclosure includes any of the preceding aspects, and the second ceramic includes 8YSZ having no porosity.

Another aspect of the disclosure includes any of the preceding aspects, and the bond coat includes M-chromium-aluminum-yttrium (MCrAlY); and the metal includes at least one of: MCrAlY, a nickel boron silicon (NiBSi) alloy, a nickel-chromium-iron-molybdenum (NiCrFeMo) alloy and a cobalt-chromium-molybdenum (CoCrMo).

Another aspect of the disclosure includes any of the preceding aspects, and the bond coat has a thickness of between 85-125 micrometers (µm); the first through fourth layers each have a thickness of between 55-75 µm; and the fifth layer has a thickness of between 100-125 µm.

Another aspect of the disclosure includes any of the preceding aspects, and the bond coat forming includes forming a first bond coat layer by one of a high velocity oxygen fuel (HVOF) thermal spraying process and a cold spraying process; and forming a second bond coat layer by one of the HVOF thermal spraying process, a flame spraying process and an air plasma spraying process.

Two or more aspects described in this disclosure, including those described in this summary section, may be combined to form implementations not specifically described herein. That is, all embodiments described herein can be combined with each other.

The details of one or more implementations are set forth in the accompanying drawings and the description below. Other features, objects and advantages will be apparent from the description and drawings, and from the claims.

### BRIEF DESCRIPTION OF THE DRAWINGS

These and other features of this disclosure will be more readily understood from the following detailed description of the various aspects of the disclosure taken in conjunction with the accompanying drawings that depict various embodiments of the disclosure, in which:
FIG. 1 is a schematic diagram of an example of a turbomachine system;
FIG. 2 is a perspective view of an illustrative turbine component in the form of a turbine blade assembly including a rotor disk, a turbine blade, and a stationary shroud;
FIG. 3 is a perspective view of a radial outermost surface or tip of a turbine blade, according to embodiments of the disclosure;
FIGS. 4A-B are cross-sectional views of an outermost abrasive layer for a turbine blade, according to embodiments of the disclosure;
FIGS. 5-8 show cross-sectional view of a method of forming outermost abrasive layer, according to embodiments of the disclosure;
FIG. 9 shows a graphical representation of a vacuum heat treatment, according to embodiments of the disclosure; and
FIG. 10 shows a graphical representation of an illustrative thermal cycle testing, according to embodiments of the disclosure.

It is noted that the drawings of the disclosure are not necessarily to scale. The drawings are intended to depict only typical aspects of the disclosure and therefore should not be considered as limiting the scope of the disclosure. In the drawings, like numbering represents like elements between the drawings.

### DETAILED DESCRIPTION

As an initial matter, in order to clearly describe the current disclosure, it will become necessary to select certain terminology when referring to and describing relevant machine components within a turbomachine and relative to a turbine blade. When doing this, if possible, common industry terminology will be used and employed in a manner consistent with its accepted meaning. Unless otherwise stated, such terminology should be given a broad interpretation consistent with the context of the present application and the scope of the appended claims. Those of ordinary skill in the art will appreciate that often a particular component may be referred to using several different or overlapping terms. What may be described herein as being a single part may include and be referenced in another context as consisting of multiple components. Alternatively, what may be described herein as including multiple components may be referred to elsewhere as a single part.

In addition, several descriptive terms may be used regularly herein, and it should prove helpful to define these terms at the onset of this section. These terms and their definitions, unless stated otherwise, are as follows. As used herein, "downstream" and "upstream" are terms that indicate a direction relative to the flow of a working fluid, such as combustion gases through the turbine engine or, for example, the flow of air through the combustor or coolant through or by one of the turbine's components. The term "downstream" corresponds to the direction of flow of the fluid, and the term "upstream" refers to the direction opposite to the flow. The terms "forward" and "aft," without any further specificity, refer to directions, with "forward" referring to an upstream portion of the part being referenced, i.e., closest to compressor, and "aft" referring to a downstream portion of the part being referenced, i.e., farthest from compressor. It is often required to describe parts that are at differing radial positions with regard to a center axis. The term "radial" refers to movement or position perpendicular to an axis. In cases such as this, if a first component resides closer to the axis than a second component, it will be stated herein that the first component is "radially inward" or "inboard" of the second component. If, on the other hand, the first component resides further from the axis than the second component, it may be stated herein that the first component is "radially outward" or "outboard" of the second component. The term "axial" refers to movement or position parallel to an axis. Finally, the term "circumferential" refers to movement or position around an axis. It will be appreciated that such terms may be applied in relation to the center axis of the turbine.

Where an element or layer is referred to as being "on," "engaged to," "disengaged from," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

As indicated above, embodiments of the disclosure provide a turbine blade including an airfoil body having a radial outermost surface relative to a turbine rotor, a bond coat over the radial outermost surface, and an outermost abrasive layer over the bond coat. The outermost abrasive layer may include a graded oxide ceramic layer or a graded metal ceramic layer. In any event, the outermost abrasive layer is vacuum heat treated to harden the layer, resulting in increased rub ratios (e.g., 0.1 compared to current ~0.4 for cBN) and improved clearance between the blade tip, creating a smaller tip gap and lower leakage compared to conventional systems (e.g., 380 micrometer (0.015 inch) improvement). The heat-treated abrasive layer is also resistant to oxidation at higher temperatures, e.g., greater than 1090°C (~2000°F), caused by the increased use of higher temperature fuels, such as hydrogen. The vacuum heat treatment also results in thermal cycle testing improvements.

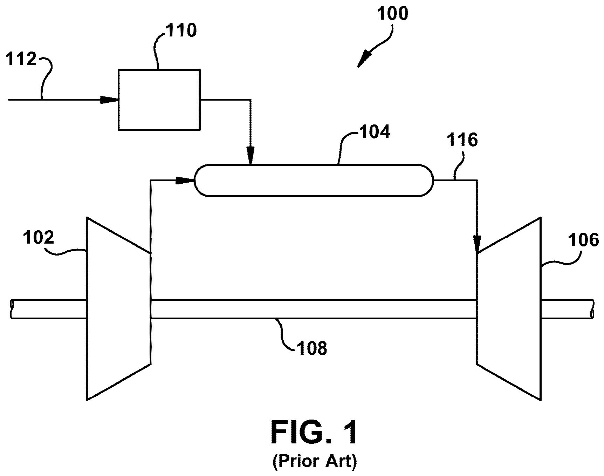

FIG. 1 is a schematic diagram of an example turbomachine system, such as a gas turbine system 100. System 100 includes a compressor 102, a combustor 104, a turbine 106, a turbine rotor 108 (hereafter "rotor 108") and a fuel nozzle 110. In an embodiment, system 100 may include a plurality of compressors 102, combustors 104, turbines 106, rotors 108 and fuel nozzles 110. Compressor 102 and turbine 106 are coupled by rotor 108. Rotor 108 may be a single shaft or a plurality of shaft segments coupled together to form rotor 108.

In one aspect, combustor 104 uses liquid and/or gas fuel, such as natural gas or a hydrogen rich synthetic gas, to run the engine. For example, fuel nozzles 110 are in fluid communication with an air supply and a fuel supply 112. Fuel nozzles 110 create an air-fuel mixture and discharge the air-fuel mixture into combustor 104, thereby causing a combustion that creates a hot pressurized exhaust gas. Combustor 104 directs the hot pressurized gas through a transition piece into a turbine nozzle (or "stage one nozzle"), and other stages of buckets and nozzles causing turbine 106 rotation. The rotation of turbine 106 causes rotor 108 to rotate, thereby compressing the air as it flows into compressor 102. In an embodiment, hot gas path components, including, but not limited to shrouds, diaphragms, nozzles, blades and transition pieces are in turbine 106, where hot gas flow across the components causes creep, oxidation, wear and thermal fatigue of turbine parts. The efficiency of the gas turbine increases with an increase in firing temperature in turbine system 100. As the firing temperature increases, the possibility of heat-related damage can increase to hot gas path components such as turbine blades. Although the following discussion primarily focuses on turbine blades in gas turbines, the concepts discussed are not limited to gas turbines and may be applied to other forms of gas turbines, e.g., aircraft engines.

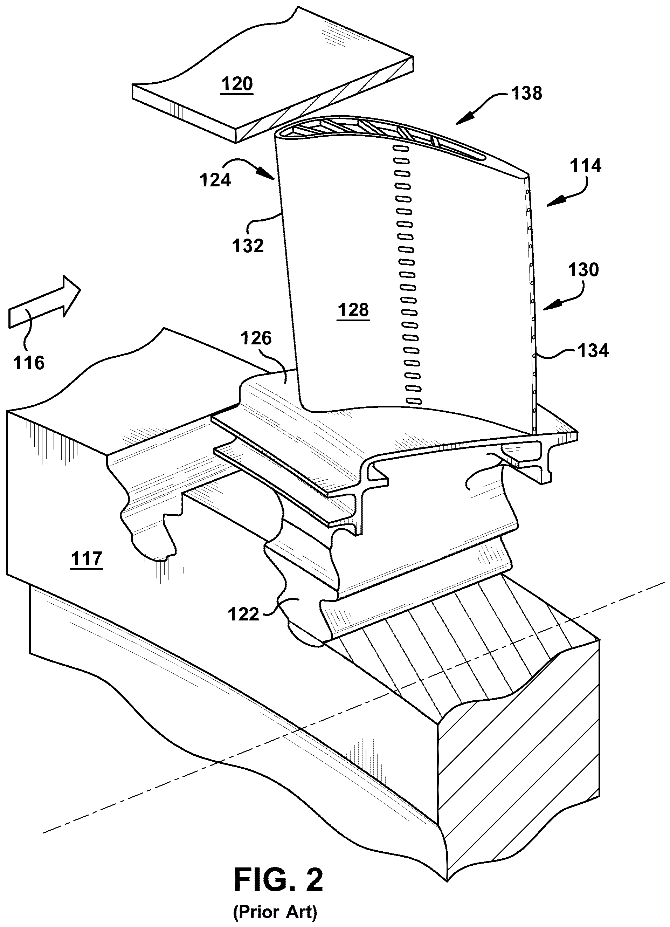

FIG. 2 is a perspective view of an illustrative turbine blade 114 which is positioned in a turbine of a gas turbine system. It will be appreciated that turbine 106 (FIG. 1) is mounted downstream from combustor 104 (FIG. 1) for receiving hot combustion gases 116 therefrom. The turbine 106 (FIG. 1), which is axisymmetric about an axial centerline axis, includes a rotor disk 117 and a plurality of circumferentially spaced apart turbine blades 114 (only one of which is shown) extending radially outwardly from rotor disk 117 along a radial axis. Rotor disk 117 is coupled to shaft or rotor 108 (FIG. 1). An annular, stationary blade shroud 120 is suitably joined to a stationary stator casing (not shown) and surrounds turbine blades 114 such that a relatively small clearance or gap remains therebetween to limit leakage of combustion gases during operation.

Each turbine blade 114 generally includes a base 122 (also referred to as root or dovetail) which may have any conventional form, such as an axial dovetail configured for being mounted in a corresponding dovetail slot in the perimeter of rotor disk 117. An airfoil body 124 is integrally joined to base 122 and extends radially or longitudinally outwardly therefrom. It will be recognized that airfoil body 124 may be hollow and/or include cooling passages (not shown) therein. Turbine blade 114 may also include an integral platform 126 disposed at the junction of airfoil body 124 and base 122 for defining a portion of the radially inner flow path for combustion gases 116. It will be appreciated that turbine blade 114 may be formed in any conventional manner, and is typically a one-piece casting, an additively manufactured part, or an additively manufacturing tip joined to a cast blade base section.

Airfoil body 124 may include a pressure side wall 128 and a suction side wall 130 extending between a leading edge 132 and a trailing edge 134. More particularly, airfoil body 124 preferably includes a generally concave pressure side wall 128 and a circumferentially or laterally opposite, generally convex suction side wall 130 extending axially between opposite leading and trailing edges 132 and 134, respectively. Side walls 128 and 130 also extend in the radial direction from platform 126 to a radial outer end 138, sometimes referred to as a blade tip or, simply, "tip."

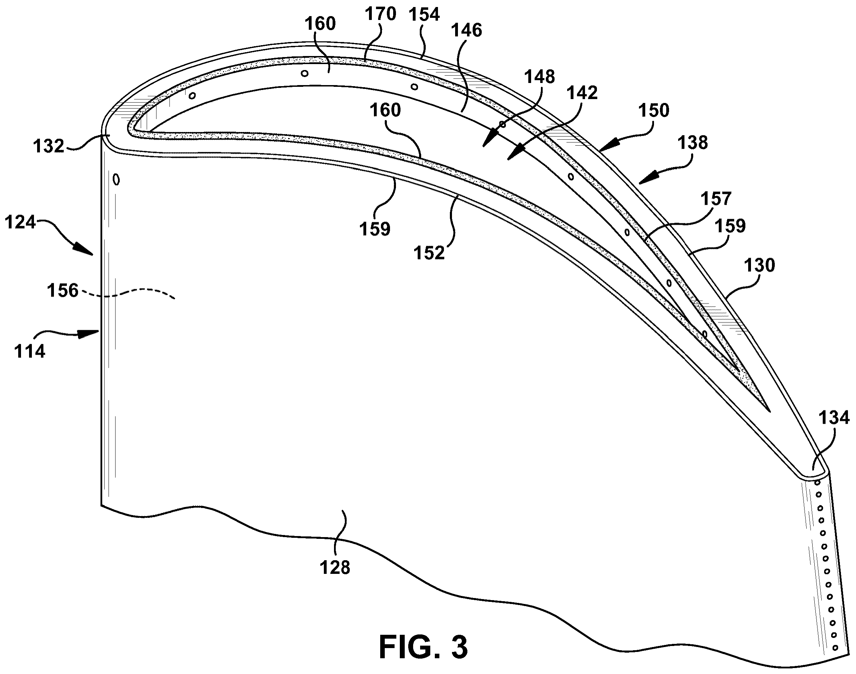

FIG. 3 is a perspective view of an illustrative radial outer end 138 (hereafter "tip 138" for brevity) at a radial outer end of airfoil body 124, on which an outermost abrasive layer 170 according to embodiments of the present disclosure may be employed. In general, tip 138 includes a tip rail 150, which may include any variety of cooling passages extending therein and/or through a radial outermost surface 160 of tip rail 150, respectively. In some cases, tip 138 may include a tip cavity 142 and tip rail 150 surrounds at least a portion of tip cavity 142. Tip 138 is disposed opposite base 122 (FIG. 2) and includes a tip plate 146 defining an outwardly facing tip end 148 between pressure side wall 128 and suction side wall 130. Tip plate 146 typically bounds internal cooling passages (not shown in detail) disposed within airfoil body 124 and are defined between pressure side wall 128 and suction side wall 130 of airfoil body 124. Internal cooling cavity 156 is configured to supply a coolant through airfoil body 124, e.g., in a radial direction. That is, coolant such as compressed air bled from the compressor may be circulated through the internal cooling cavity 156 during operation. Internal cooling cavity 156 may include any now known or later developed coolant carrying passages or circuits including but not limited to: cooling passages, impingement sleeves or elements, connecting passages, cavities, pedestals, etc. Tip plate 146 may be integral to turbine blade 114, or it may be welded/brazed into place after the blade is cast.

Blade tips 138 may include tip rail 150 to provide certain performance advantages, such as reduced leakage flow. Coinciding with pressure side wall 128 and suction side wall 130, tip rail 150 may be described as including a pressure side wall rail 152 and a suction side wall rail 154, respectively. Generally, pressure side wall rail 152 extends radially outwardly from tip plate 146 and extends from leading edge 132 to trailing edge 134 of airfoil body 124. As illustrated, the path of pressure side wall rail 152 is adjacent to or near the outer radial edge of pressure side wall 128 (i.e., at or near the periphery of tip plate 146 such that it aligns with the outer radial edge of the pressure side wall 128). Similarly, as illustrated, suction side wall rail 154 extends radially outwardly from tip plate 146 and may extend from leading edge 132 to trailing edge 134 of airfoil body 124. The path of suction side wall rail 154 is adjacent to or near the outer radial edge of suction side wall 130 (i.e., at or near the periphery of the tip plate 146 such that it aligns with the outer radial edge of the suction side wall 130). Pressure side wall rail 152 and/or suction side wall rail 154 may be described as having an inner rail surface 157 and an outer rail surface 159. Pressure side wall rail 152 and/or suction side wall rail 154 may also be described as having a radial outermost surface 160, i.e., a radially outward facing end surface, between inner rail surface 157 and outer rail surface 159. It is noted again that radial is relative to turbine rotor 108 (FIG. 1). It should be understood that tip rail(s) 150 may not necessarily follow the pressure or suction side wall rails. That is, in alternative types of tips in which the present disclosure may be used, tip rails 150 may be moved away from the edges of tip plate 146 and may not extend to trailing edge 134.

Formed in this manner, it will be appreciated that tip rail 150 defines tip cavity 142 at tip 138 of turbine blade 114. As one of ordinary skill in the art will appreciate, tip 138 configured in this manner, i.e., one having this type of tip cavity 142, is often referred to as a "squealer tip" or a tip having a "squealer pocket or cavity." The height and width of pressure side wall rail 152 and/or suction side wall rail 154 (and thus the depth of tip cavity 142) may be varied depending on best performance and the size of the overall turbine assembly. It will be appreciated that tip plate 146 forms the floor of tip cavity 142 (i.e., the inner radial boundary of the cavity), tip rail 150 forms the side walls of tip cavity 142, and tip cavity 142 remains open through an outer radial face. Tip cavity 142, once installed within a turbine engine, is bordered closely by annular, stationary turbine shroud 120 (see FIG. 2) that is slightly radially offset therefrom. As will be further described herein, radial outermost surface 160 of tip 138 with outermost abrasive layer 170 thereon may rub against annular, stationary turbine shroud 120 (FIG. 2). In certain embodiments, airfoil body 124 and tip 138 may be cast. Alternatively, they may be additively manufactured. In either case, cooling passages 162 may be cast or additively manufactured simultaneously during the airfoil manufacturing process. Airfoil body 124 may include any now known or later developed material capable of withstanding the environment of turbine 106 (FIG. 1) such as but not limited to nickel-based superalloys. While a particular configuration of tip 138 has been described herein, it will be recognized that other configurations including radial outermost surface 160 are possible and considered within the scope of the disclosure.

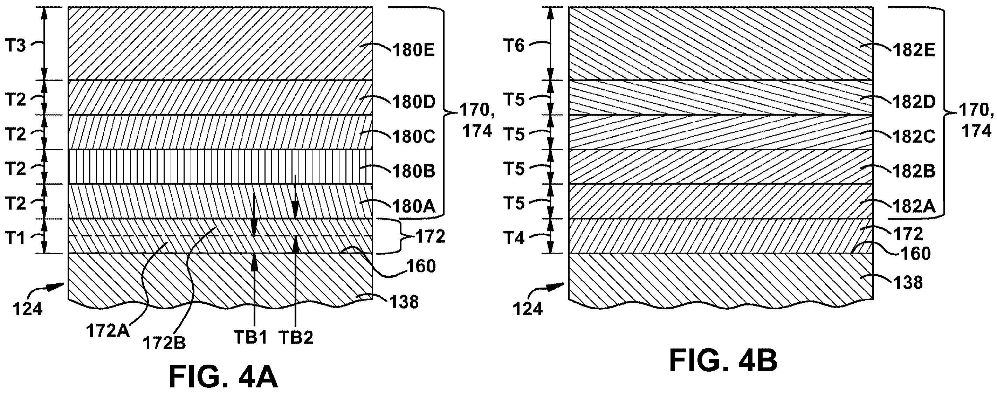

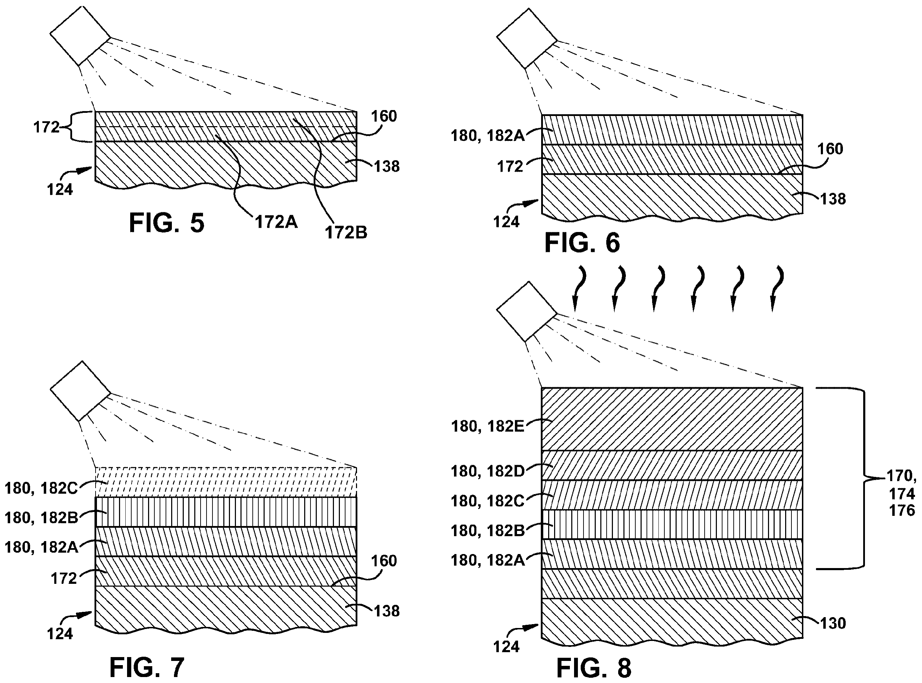

FIGS. 4A-B show cross-sectional views of an outermost abrasive layer 170 (hereafter "abrasive layer 170" for brevity) on radial outermost surface 160, according to various embodiments of the disclosure. Further, FIGS. 5-8 show cross-sectional views of a method of forming abrasive layer 170 for radial outermost surface 160 of turbine blade 114. The method of forming abrasive layer 170 for radial outermost surface 160 of turbine blade 114 generally includes, as will be described herein, forming a bond coat 172 on radial outermost surface 160 of turbine blade 114, forming abrasive layer 170 as one of a graded oxide ceramic layer 174 and a graded metal ceramic layer 176 over bond coat 172 on radial outermost surface 160 of turbine blade 114, and vacuum heat treating the one of graded oxide ceramic layer 174 and graded metal ceramic layer 176 on radial outermost surface 160 of turbine blade 114.

Turbine blade 114 includes a bond coat 172 over radial outermost surface 160. Bond coat 172 may include an M-chromium-aluminum-yttrium (MCrAlY) alloy, where M includes cobalt-nickel (more Co than Ni), nickel (Ni), nickel-cobalt (more Ni than Co) or cobalt (Co). Hence, bond coat 172 may include at least one of: cobalt-nickel-chromium-aluminum-yttrium (CoNiCrAlY), nickel-chromium-aluminum-yttrium (NiCrAlY), nickel-cobalt-chromium-aluminum-yttrium (NiCoCrAlY), and cobalt-chromium-aluminum-yttrium (CoCrAlY). Other forms of bond coat 172 are also possible. FIG. 5 shows forming bond coat 172 on radial outermost surface 160 of turbine blade 114. Bond coat 172 may be formed using any now known or later developed technique, such as but not limited to spraying, thermal spraying and/or plasma spraying. In certain embodiments, as shown in FIGS. 4A and 5 only, bond coat 172 may include two layers 172A, 172B, and bond coat 172 forming may include forming two layers 172A, 172B. For example, a first (dense) bond coat layer 172A may be formed by a high velocity oxygen fuel (HVOF) thermal spraying process or a cold spraying process; and a second (less dense, rough) bond coat layer 172B may be formed by the HVOF thermal spraying process, a flame spraying process or an air plasma spraying process. First bond coat layer 172A may have a thickness TB1 (FIG. 4A) of 55-76 micrometers (µm), and second bond coat layer 172B may have a thickness TB2 (FIG. 4A) of 30-50 µm. Hence, bond coat 172 may have an overall thickness T1 of between 85-125 micrometers (µm) (~0.003-0.0005 inches); however, other thicknesses are also possible

Turbine blade 114 also includes abrasive layer 170 over bond coat 172. As shown in FIGS. 4A-B, outermost abrasive layer 170 may take a variety of forms.

Referring to FIG. 4A, in certain embodiments, abrasive layer 170 includes a graded oxide ceramic layer 174 including a plurality of different layers having different concentrations of oxide ceramics. More particularly, graded oxide ceramic layer 174 may include a first layer 180A over bond coat 172 including 100 weight percentage (weight %) of a first ceramic and 0 weight % of a second ceramic different than the first ceramic. In this embodiment, the first ceramic consists of 8 weight % yttria stabilized zirconia (8YSZ), i.e., (ZrO₂)_{0.92}(Y₂O₃)_{0.08}. Further, the second ceramic when provided in subsequent layers 180B-E may include pure alumina (Al₂O₃) or zirconia toughened alumina (ZTA). The pure alumina may include 100 weight % alumina, and the ZTA may include between 10-25 weight % zirconia (Zr) balance alumina. The ZTA can be blended or sintered and crushed powder. The first and second ceramics are solid, i.e., with 0% porosity.

As used herein, the weight percentages (weight %) of the materials are based on those present in a final product (and initial feed stock). It is recognized however that mixing, blending and/or adhesive agents or carriers, such as but not limited to polyvinyl acetate (PVA), may be used during the application process. Typically, these agents or carriers evaporate or otherwise dissipate during the application processes described herein, but the final product may include some minor residual amounts of these agents or carriers, e.g., less than 1%.

Graded oxide ceramic layer 174 may also include a second layer 180B over first layer 180A. Second layer 180B may include 65-85 weight (%) of the first ceramic (i.e., 8YSZ) and 15-35 weight % of the second ceramic (i.e., pure Al₂O₃ or ZTA). In certain embodiments, second layer 180B may include 75 weight % of the first ceramic and 25 weight % of the second ceramic. Graded oxide ceramic layer 174 may also include a third layer 180C over second layer 180B. Third layer 180C may include 40-60 weight % of the first ceramic and 40-60 weight % of the second ceramic. In certain embodiments, third layer 180C may include 50 weight % of the first ceramic and 50 weight % of the second ceramic. Graded oxide ceramic layer 174 may also include a fourth layer 180D over third layer 180C. Fourth layer 180D may include 5-25 weight % of the first ceramic and 75-95 weight % of the second ceramic. In certain embodiments, third layer 180C may include 15 weight % of the first ceramic and 85 weight % of the second ceramic. Graded oxide ceramic layer 174 may also include a fifth (outermost) layer 180E over fourth layer 180D. Fifth layer 180E may include 0 weight % of the first ceramic (i.e., 8YSZ) and 100 weight % of the second ceramic (i.e., pure Al₂O₃ or ZTA). Fifth layer 180E may have a porosity of less than 2%, but a porosity between 5-10% may also be possible. "Porosity," as used herein, is a ratio of open space volume to total volume of the stated structure, e.g., layer 180E. Typically, in this regard, porosity is stated as a percentage of volume of open space to overall or total volume of the stated structure. The open space is empty areas in a solid material and may be referred to herein as "pores" and may include interconnecting passages in the material of the stated structure. As used herein, a three-dimensional boundary of a porous region or sub-region for purpose of identifying a "total volume" thereof can be identified by where a change in porosity of greater than 2% relative to an adjacent region or sub-region occurs within, e.g., layer 180E. In certain embodiments, each of first through fourth layers 180A-D may each have a thickness T2 of between 55-75 µm (i.e., ~0.001-0.002 inches), and fifth layer 180E may have a thickness T3 of between 100-125 µm (~0.0039-0.009 inches). Other thicknesses may also be possible.

As shown in FIG. 7, each of layers 180A-E are sequentially or gradually formed over bond coat 172 until fifth layer 180E is formed to a desired thickness. While five layers 180A-E are shown, it will be recognized that practically any number of discrete layers may exist as graded oxide ceramic layer 174 gradually changes concentrations of each of first and second ceramic. Abrasive layer 170, i.e., the layers of graded oxide ceramic layer 174, may be formed using any now known or later developed form of thermal plasma spray, e.g., atmospheric plasma spray, but can also be formed using other processes such as but not limited to laser cladding and sintering. The parameters of the forming process can be controlled in a known fashion to create the different concentration of layers at the thicknesses described herein.

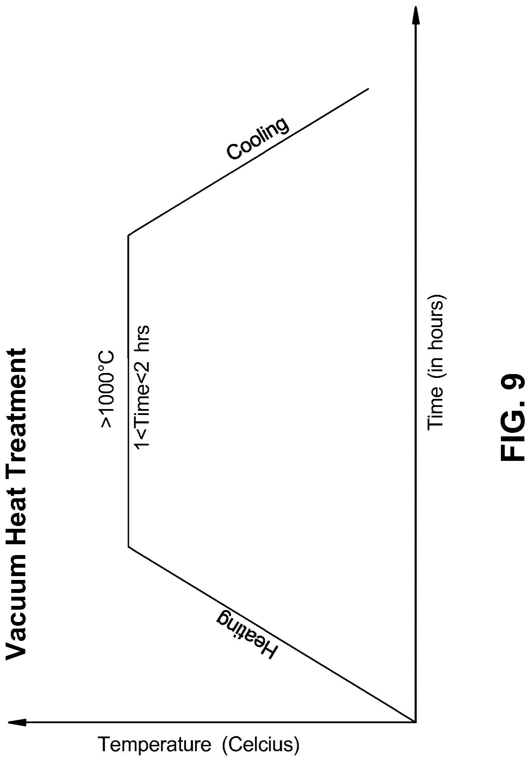

In contrast to conventional processes, as shown in FIG. 8, abrasive layer 170, e.g., graded oxide ceramic layer 174, formation includes a post-formation, vacuum heat treatment (arrows 184). In certain embodiments, the heat treatment may include exposing graded oxide ceramic layer 174 to a temperature greater than 1000°C for a duration of at least 1 hour and then allowing graded oxide ceramic layer 174 to cool. In other embodiments, the vacuum heat treating may include increasing the temperature of graded oxide ceramic layer 174 to a temperature greater than 1200°C for a duration of at least 1.5 hours and then allowing graded oxide ceramic layer 174 to cool. FIG. 9 shows a graphical representation of the vacuum heat treatment.

Referring to FIG. 4B, in another embodiment, abrasive layer 170 may include a graded metal ceramic layer 176 including a plurality of different layers having different concentrations of metal and ceramic. More particularly, graded metal ceramic layer 176 may include a first layer 182A over bond coat 172 consisting of a third ceramic consisting of 8YSZ having a porosity between 5-25%. Graded metal ceramic layer 176 may also include a second layer 182B over first layer 182A. Second layer 182B may include 65-85 weight % of a metal and 15-35 weight % of a fourth ceramic. In certain embodiments, third layer 182C may include 75 weight % of the metal and 25 weight % of the fourth ceramic. In certain embodiments, the metal may include at least one of: MCrAlY, a nickel boron silicon (NiBSi) alloy, a nickel-chromium-iron-molybdenum (NiCrFeMo) alloy and a cobalt-chromium-molybdenum (CoCrMo). As noted herein, within an MCrAlY alloy, M includes cobalt-nickel (more Co than Ni), nickel (Ni), nickel-cobalt (more Ni than Co) or cobalt (Co). Hence, in certain embodiments, the metal of graded metal ceramic layer 176 may include at least one of: cobalt-nickel-chromium-aluminum-yttrium (CoNiCrAlY), nickel-chromium-aluminum-yttrium (NiCrAlY), nickel-cobalt-chromium-aluminum-yttrium (NiCoCrAlY), and cobalt-chromium-aluminum-yttrium (CoCrAlY). Where NiCrFeMo alloy is used, it may include HASTELLOY^{®} X, and where CoCrMo alloy is used, it may include TRIBALOY^{®} T-800^{®} and T-400^{®}. In certain embodiments, the fourth ceramic may be different than the third ceramic and includes, as previously described herein, pure alumina (Al₂O₃) or zirconia toughened alumina (ZTA). In another embodiment, the fourth ceramic may include 8YSZ having no porosity, i.e., it is solid in contrast to the porous 8YSZ in first layer 182A of graded metal ceramic layer 176.

Graded metal ceramic layer 176 may also include a third layer 182C over second layer 182B. Third layer 182C may include 40-60 weight % of the metal and 40-60 weight % of the fourth ceramic. In certain embodiments, third layer 182C may include 50 weight % of the metal and 50 weight % of the fourth ceramic. Graded metal ceramic layer 176 may also include a fourth layer 182D over third layer 182C. Fourth layer 182D may include 5-25 weight % of the metal and 75-95 weight % of the fourth ceramic. In certain embodiments, fourth layer 182D may include 15 weight % of the metal and 85 weight % of the fourth ceramic. Graded metal ceramic layer 176 may also include a fifth (outermost) layer 182E over fourth layer 182D. Fifth layer 182E may include 0 weight % of the metal, e.g., MCrAlY, and 100 weight % of the fourth ceramic, e.g., alumina or ZTA. In FIG. 4B, bond coat 172 may have a thickness T4 of between 85-125 µm (~0.003-0.005 inches). Further, first through fourth layers 182A-D may each have a thickness T5 of between 55-75 µm (~0.001-0.002 inches), and fifth layer 182E may have a thickness T6 of between 100-125 µm (~0.0039-0.0049 inches). Other thicknesses are also possible.

As shown in FIG. 7, each of layers 182A-E are sequentially or gradually formed over bond coat 172 until fifth layer 182E is formed to a desired thickness. While five layers 182A-E are shown, it will be recognized that practically any number of discrete layers may exist as graded metal ceramic layer 176 gradually changes concentrations of each of the metal and the fourth ceramic. Abrasive layer 170, i.e., graded metal ceramic layer 176, may be formed using any now known or later developed form of thermal plasma spray, e.g., atmospheric plasma spray, laser cladding, sintering, etc. In contrast to conventional processes, as shown in FIG. 8, the method may include exposing abrasive layer 170, i.e., graded metal ceramic layer 176, to a post-formation, vacuum heat treatment (arrows 184). In certain embodiments, the heat treatment may include exposing graded metal ceramic layer 176 to a temperature greater than 1000°C for a duration of at least 1 hour and then allowing graded metal ceramic layer 176 to cool. In another embodiment, the vacuum heat treating may include increasing the temperature of graded metal ceramic layer 176 to a temperature greater than 1200°C for a duration of at least 1.5 hours and then allowing graded metal ceramic layer 176 to cool. As noted, FIG. 9 shows a graphical representation of the vacuum heat treatment.

With further regard to the heat treatment, regardless of abrasive layer 170 format, the heat treatment results in hardening of the layer, resulting in increased rub ratios (e.g., 0.1 compared to current ~0.4 for cBN) and improved clearance between tip 138 (FIG. 2) and shroud 120 (FIG. 2), creating a smaller tip gap and lower leakage compared to conventional systems (e.g., 380 micrometer (0.015 inch) improvement). The heat-treated abrasive layer 170 is also resistant to oxidation at higher temperatures, e.g., greater than 1090°C (~2000°F), caused by the increased use of higher temperature fuels, such as hydrogen.

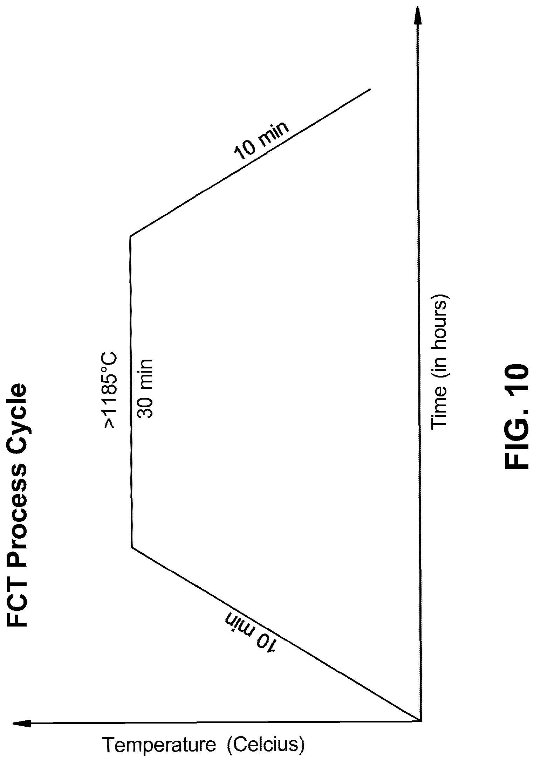

As part of quality assurance testing, turbine airfoils 114 are exposed to thermal cycle testing, sometimes referred to as furnace cycle testing (FCT). FCT includes exposing turbine airfoil body 124 and, more particularly, abrasive layer 170 to repeated high temperature cycles. FIG. 10 is a graphical representation of an illustrative FCT process cycle. As illustrated, in one non-limiting example of FCT, a temperature of turbine airfoil body 124 and abrasive layer 170 may be raised to greater than 1180°C (~2160°F) over 10 minutes, held at that temperature for 30 minutes, then forced to cool over 10 minutes (fan) to about 93°C (~200°F). The cycle is then repeated numerous times until failure occurs in the tested turbine airfoil body 124, such as spalling or cracking of at least part of abrasive layer 170 thereon.

The vacuum heat treatment according to embodiments of the disclosure results in a number of abrasive layer 170 performance improvements observed through thermal cycle testing. Depending on the materials used, as described herein, significant increases in hardness in an outermost layer of abrasive layer 170, i.e., fifth layer 180E, 182E, is observed. For example, for graded oxide ceramic layer 174: a) where ZTA is used as the second ceramic, a 17.5% increase in hardness is observed; b) where 8YSZ is used as the second ceramic, a 12.3% increase in hardness is observed; and c) where alumina is used as the second ceramic, a 13.0% increase in hardness is observed. The layers between bond coat 172 and the outermost layer of abrasive layer 170, i.e., fifth layers 180E, 182E, may be referred to as adhesion layers since they act to adhere the outermost layer to bond coat 172. FCT is also used to test longevity of these adhesion layers indicated by the number of thermal cycles they survive before their adhesion fails, e.g., through spalling or disconnection. Depending on the materials used, as described herein, significant increases in the longevity of adhesion layers of abrasive layer 170 is observed. For example, for graded oxide ceramic layer 174 where 8YSZ and alumina are used as the first and second ceramics (i.e., with layers of 100 weight % 8YSZ, 75 weight % 8YSZ+25 weight % Al₂O₃, 50 weight % 8YSZ+50 weight % Al₂O₃, 15 weight % 8YSZ+85 weight % Al₂O₃, and 100 weight % Al₂O₃), a 141% increase in survived cycles is observed.

Embodiments of the disclosure provide various technical and commercial advantages, examples of which are discussed herein. The turbine blade with the abrasive layer described herein is vacuum heat treated to harden the layer, resulting in lower rub ratios (e.g., 0.1 compared to current ~0.4 for cBN) and improved clearance between the blade tip, creating a smaller tip gap and lower leakage compared to conventional systems (e.g., 380 micrometer (0.015 inch) improvement). The heat-treated abrasive layer is also resistant to oxidation at higher temperatures, e.g., greater than 1090°C (~2000°F), caused by higher temperatures in the hot gas path. The vacuum heat treatment also results in thermal cycle testing improvements, as described herein.

Approximating language, as used herein throughout the specification and claims, may be applied to modify any quantitative representation that could permissibly vary without resulting in a change in the basic function to which it is related. Accordingly, a value modified by a term or terms, such as "about," "approximately" and "substantially," are not to be limited to the precise value specified. In at least some instances, the approximating language may correspond to the precision of an instrument for measuring the value. Here and throughout the specification and claims, range limitations may be combined and/or interchanged; such ranges are identified and include all the sub-ranges contained therein unless context or language indicates otherwise. "Approximately" or "about," as applied to a particular value of a range, applies to both end values and, unless otherwise dependent on the precision of the instrument measuring the value, may indicate +/- 10% of the stated value(s).

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description but is not intended to be exhaustive or limited to the disclosure in the form disclosed. Many modifications and variations will be apparent to those of ordinary skill in the art without departing from the scope and spirit of the disclosure. The embodiments were chosen and described in order to best explain the principles of the disclosure and the practical application of the technology and to enable others of ordinary skill in the art to understand the disclosure for contemplating various modifications to the present embodiments, which may be suited to the particular use contemplated.

## Claims

1. A turbine blade, comprising:
an airfoil body having a radial outermost surface relative to a turbine rotor;
a bond coat over the radial outermost surface; and
an outermost abrasive layer over the bond coat, wherein the outermost abrasive layer includes a graded oxide ceramic layer including:
a first layer over the bond coat including 100 weight % of a first ceramic and 0 weight % of a second ceramic different than the first ceramic, the first ceramic consisting of 8 weight % yttria stabilized zirconia (8YSZ);
a second layer over the first layer including 65-85 weight % of the first ceramic and 15-35 weight % of the second ceramic;
a third layer over the second layer including 40-60 weight % of the first ceramic and 40-60 weight % of the second ceramic;
a fourth layer over the third layer including 5-25 weight % of the first ceramic and 75-95 weight % of the second ceramic; and
a fifth layer over the fourth layer including 0 weight % of the first ceramic and 100 weight % of the second ceramic.

2. The turbine blade of claim 1, wherein the bond coat includes at least one of: cobalt-nickel-chromium-aluminum-yttrium (CoNiCrAlY), nickel-chromium-aluminum-yttrium (NiCrAlY), nickel-cobalt-chromium-aluminum-yttrium (NiCoCrAlY), and cobalt-chromium-aluminum-yttrium (CoCrAlY).

3. The turbine blade of claim 1, wherein the second ceramic includes one of pure alumina (Al₂O₃) or zirconia toughened alumina (ZTA).

4. The turbine blade of claim 1, wherein the bond coat has a thickness of between 85-125 micrometers (µm); the first through fourth layers each have a thickness of between 55-75 µm; and the fifth layer has a thickness of between 100-125 µm.

5. The turbine blade of claim 1, wherein the outermost abrasive layer is formed using a thermal plasma spray and a post-formation vacuum heat treatment including exposing the graded oxide ceramic layer to a temperature greater than 1000°C for a duration of at least 1 hour and then allowing the graded oxide ceramic layer to cool.

6. A method of forming an outermost abrasive layer for a radial outermost surface of a turbine blade, the method comprising:
forming a bond coat on the radial outermost surface of the turbine blade;
forming one of a graded oxide ceramic layer and a graded metal ceramic layer over the bond coat on the radial outermost surface of the turbine blade; and
heat treating the one of the graded oxide ceramic layer and the graded metal ceramic layer on the radial outermost surface of the turbine blade.

7. The method of claim 6, wherein the heat treating includes vacuum heat treating includes exposing the outermost abrasive layer to a temperature greater than 1000°C for a duration of at least 1 hour and then allowing the outermost abrasive layer to cool.

8. The method of claim 7, wherein the vacuum heat treating includes increasing the temperature of the outermost abrasive layer to a temperature greater than 1200°C for a duration of at least 1.5 hours and then allowing the outermost abrasive layer to cool.

9. The method of claim 6, wherein the heat treating includes exposing the outermost abrasive layer in air to a temperature between 750°C and 1000°C for a duration between 30 minutes and 4 hours.

10. The method of claim 6, wherein the bond coat includes at least one of: cobalt-nickel-chromium-aluminum-yttrium (CoNiCrAlY), nickel-chromium-aluminum-yttrium (NiCrAlY), nickel-cobalt-chromium-aluminum-yttrium (NiCoCrAlY), and cobalt-chromium-aluminum-yttrium (CoCrAlY).

11. The method of claim 6, wherein the outermost abrasive layer includes a graded oxide ceramic layer including:
a first layer over the bond coat including 100 weight % of a first ceramic and 0 weight % of a second ceramic different than the first ceramic, the first ceramic consisting of 8 weight % yttria stabilized zirconia (8YSZ);
a second layer over the first layer including 65-85 weight % of the first ceramic and 15-35 weight % of the second ceramic;
a third layer over the second layer including 40-60 weight % of the first ceramic and 40-60 weight % of the second ceramic;
a fourth layer over the third layer including 5-25 weight % of the first ceramic and 75-95 weight % of the second ceramic; and
a fifth layer over the fourth layer including 0 weight % of the first ceramic and 100 weight % of the second ceramic.

12. The method of claim 11, wherein the second ceramic includes one of pure alumina (Al₂O₃) or zirconia toughened alumina (ZTA).

13. The method of claim 11, wherein the bond coat has a thickness of between 85-125 micrometers (µm); the first through fourth layers each have a thickness of between 55-75 µm; and the fifth layer has a thickness of between 100-125 µm.

14. The method of claim 6, wherein the outermost abrasive layer includes a graded metal ceramic layer including:
a first layer over the bond coat consisting of a first ceramic consisting of 8 weight % yttria stabilized zirconia (8YSZ) having a porosity between 5-25%;
a second layer over the first layer including 65-85 weight % of a metal and 15-35 weight % of a second ceramic;
a third layer over the second layer including 40-60 weight % of the metal and 40-60 weight % of the second ceramic;
a fourth layer over the third layer including 5-25 weight % of the metal and 75-95 weight % of the second ceramic; and
a fifth layer over the fourth layer including 0 weight % of the metal and 100 weight % of the second ceramic.

15. The method of claim 14, wherein the second ceramic is different than the first ceramic and includes one of pure alumina (Al₂O₃) or zirconia toughened alumina (ZTA).
